(19) Europäisches Patentamt / European Patent Office / Office européen des brevets

(11) **EP 2 609 401 B1**

(12) **FASCICULE DE BREVET EUROPEEN**

(45) Date de publication et mention de la délivrance du brevet:
**30.10.2019  Bulletin 2019/44**

(21) Numéro de dépôt: **11758502.6**

(22) Date de dépôt: **12.08.2011**

(51) Int Cl.:
**G01D 5/244** *(2006.01)*      **G01D 5/245** *(2006.01)*

(86) Numéro de dépôt international:
**PCT/FR2011/051912**

(87) Numéro de publication internationale:
**WO 2012/025683 (01.03.2012 Gazette 2012/09)**

(54) **DIPOSITIF DE DETECTION MAGNETIQUE DE POSITION ABSOLUE MULTITOUR**

MAGNETISCHER UND IN MEHRERE RICHTUNGEN DREHBARER ABSOLUTPOSITIONSDETEKTOR

MAGNETIC MULTI-TURN ABSOLUTE POSITION DETECTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.08.2010  FR 1056726**

(43) Date de publication de la demande:
**03.07.2013  Bulletin 2013/27**

(73) Titulaire: **Moving Magnet Technologies**
**25000 Besançon (FR)**

(72) Inventeurs:
• **DELBAERE, Michaël**
  **F-25720 Avanne - Aveney (FR)**

• **MASSON, Gérald**
  **F-25000 Besancon (FR)**
• **RONNAT, Yannick**
  **F-25320 Vorges Les Pins (FR)**
• **BIWERSI, Stéphane**
  **F-25140 Frambouhans (FR)**

(74) Mandataire: **IP Trust**
**2, rue de Clichy**
**75009 Paris (FR)**

(56) Documents cités:
**EP-A1- 1 830 155      EP-A1- 2 034 267**
**FR-A1- 2 919 385**

EP 2 609 401 B1

**Description**

La présente invention concerne le domaine des capteurs magnétiques de position et plus précisément un dispositif de détection magnétique destiné à mesurer précisément (c'est-à-dire typiquement avec une précision inférieure à 1 degré) la position absolue d'un arbre d'entrée en rotation sur plusieurs tours, comme par exemple une colonne de direction dont la position doit être détectée sur un angle pouvant aller jusqu'à +/- 1080° (+/-3 tours). L'invention concerne également un dispositif de détection magnétique de position absolue multitour permettant la détection d'un couple dans une configuration compacte.

On connait la demande de brevet WO2009/047401 de la demanderesse qui présente l'utilisation de deux capteurs de position, l'un pour la position de l'arbre d'entrée grâce à un capteur dit « fin » et l'autre pour l'information multitour via une information dite « grossière » car dépendante de la transformation de mouvement. L'un des intérêts de ce capteur est que les 2 informations sont absolues. Ainsi, même en cas d'endommagement du capteur d'entrée, une information absolue, certes grossière, est maintenue. Dans la recherche d'un capteur pour application à haut niveau de sécurité cela représente un avantage net en termes de robustesse par rapport à l'art antérieur. Néanmoins, l'information de position issue du capteur d'entrée à aimantation diamétrale n'est pas toujours suffisamment précise pour une application critique telle que celle de la colonne de direction car, sur 360° d'angle de détection, on ne peut atteindre des précisions très inférieures à +/-1° avec un capteur sans contact, compatible avec les contraintes d'industrialisation et de robustesse d'applications grands volumes.

La demande de brevet EP 1 830 155 A1 apporte une réponse à cette problématique de précision en revendiquant l'emploi d'un capteur lié à l'axe d'entrée, dit « capteur principal » et réalisé au moyen d'un aimant multipolaire dit « aimant principal » en association avec un capteur absolu qu'on appellera « capteur secondaire » ou « capteur de tour » donnant une position multitour grossière via une transformation de mouvement. L'ensemble se veut constituer un capteur précis.

Néanmoins, les solutions telles que décrites dans cette demande souffrent à la fois d'un encombrement excessif et d'une impossibilité à répondre à l'ensemble des spécifications en termes de précision des applications concernées. Elles sont, de plus, uniquement illustrées avec l'emploi de 2 sondes magnétorésistive de type AMR pour les 2 sondes magnétosensibles, ce qui restreint les possibilités.

Cette solution est en effet encombrante, comme en attestent les figures illustrant les configurations proposées. En effet, dans deux des trois cas présentés, la transformation de mouvement et le capteur secondaire sont dissociés de l'aimant principal conduisant à l'emploi de deux circuits imprimés distincts et donc à un surcoût et à une augmentation de la taille de la structure. Ainsi, cette solution ne peut être intégrée facilement à d'autres dispositifs mécatronique (moteur, capteur...) pour des raisons d'encombrement excessif. La troisième configuration propose l'intégration d'une des roues du train d'engrenages directement sur le rotor principal, mais là encore, l'encombrement axial n'est pas optimisé puisque l'axe du rotor secondaire est orthogonal à celui du rotor principal.

D'autre part, l'invention prescrit spécifiquement l'emploi de sondes magnétorésistives. Or, si elles sont bien adaptées aux configurations d'aimant dites « bout d'axe », comme c'est le cas du capteur secondaire lorsque la sonde est positionnée sur l'axe de révolution de l'aimant, leur emploi pour des configurations en dehors de l'axe de révolution d'un aimant, telle qu'intégré au rotor principal, présente l'inconvénient de constituer une solution présentant des limites dimensionnelles sensibles comme nous l'expliquons ci-après.

En effet, les composantes normale, tangentielle et axiale générées par un aimant multipolaire ne sont généralement pas d'amplitudes égales et présentent des variations non parfaitement sinusoïdales. La variation d'angle magnétique n'étant pas linéaire en fonction du déplacement, il en découle une erreur angulaire, en rappelant que les éléments magnétorésistifs (de type AMR) tels que décrits génèrent, via une variation physique de leur résistance, un signal de sortie directement proportionnel à la rotation du champ magnétique dans un plan avec une périodicité de 180°.

Ces défauts dans les signaux ont plusieurs origines : défaut de sensibilité des sondes, défaut d'aimantation, distorsions induites par la proximité de la sonde de la surface de l'aimant, distorsions induites par la proximité d'un aimant secondaire comme c'est le cas dans la solution ou tout simplement effets de bords que présente une bague dés lors qu'elle n'est pas infiniment longue. Cela impose alors l'emploi d'artifices (algorithmes, mémoires...) décrits dans la demande EP 1 830 155 et destinés à mesurer les offsets des 2 composantes ou à corriger informatiquement ces erreurs. Ces derniers réclament une capacité de calculs qui doit être allouée dans l'électronique de traitement, ce qui est pénalisant. Ainsi, la configuration de capteur telle que décrite dans la demande de brevet EP 1 830 155 est clairement adaptée aux configurations qui vont favoriser des variations sinusoïdales et de même amplitude des 2 composantes utiles du champ magnétique dans le but de minimiser ces dispersions via une variation de l'angle du champ magnétique la plus linéaire possible. Il faut alors rappeler que, de manière générale, le flux magnétique mesuré à la surface d'un aimant multipolaire présente une allure trapézoïdale, sauf si l'on s'éloigne sensiblement de la surface, ou si on utilise un très grand nombre de paires de pôles.

Le caractère non générique de la solution qui en découle représente donc un handicap. Par exemple, on recommanderait plutôt des géométries à grands nombres de paires de pôles ou encore un nombre de paires de pôles plus réduit mais associé à une grande distance de mesure car favorisant le caractère sinusoïdal des inductions lues par la sonde, autant de configurations dont le défaut majeur est alors celui d'une amplitude de signal faible donc sensibles aux perturbations extérieures ou présentant des niveaux de bruit importants. D'autres configurations permettent de tendre vers cet équilibre magnétique qui procure une variation linéaire de l'angle du champ magnétique, mais toutes revêtent un inconvénient. Ainsi, un rotor multipolaire dont la géométrie est caractérisée par un petit diamètre se traduira par une incompatibilité mécanique avec le diamètre de l'axe de l'application dont la position doit être détectée. Ou encore une bague très haute en regard de son diamètre va accentuer l'encombrement axial déjà excessif de ce capteur.

D'autre part, notons que si on souhaite utiliser un circuit imprimé commun aux 2 sondes des 2 capteurs, l'utilisation de sondes de type AMR impose l'exploitation des composantes magnétiques axiale et tangentielle, notées, Bz et Bt, sur l'aimant principal puisque ce sont celles exploitées sur le capteur secondaire. Cela implique un décalage de la sonde du plan médian de l'aimant de façon à générer une composante axiale. L'inconvénient majeur est que cela impose de positionner la sonde du capteur principal à une distance très précise du plan médian de l'aimant dans le but de tendre vers un équilibre des composantes axiale et tangentielle procurant une variation linéaire de l'angle magnétique au cours de la variation de l'angle mécanique. Cet équilibre est instable dés lors que la bague a une dimension axiale réduite comme illustré dans la solution. Un tel capteur est donc peu robuste aux jeux axial et radial et le flux magnétique exploité par ce type de configuration est faible puisqu'il repose essentiellement sur l'utilisation d'un flux de fuite pour ce qui concerne la composante axiale et requiert une rémanence d'aimant typique d'un aimant à haute énergie pour disposer d'un flux acceptable. D'autre part, ce décalage impose finalement un rapprochement important entre la sonde principale et l'aimant secondaire ce qui accentue l'imprécision du capteur à cause des perturbations magnétiques induites par l'aimant secondaire sur la sonde principale. Si on souhaite réaliser le décalage dans l'autre direction de l'aimant, ce qui est envisageable, l'encombrement de la solution est encore plus dégradé.

Dans l'hypothèse où on souhaite générer une configuration magnétiquement plus stable, on peut imaginer utiliser les composantes normale et tangentielle générées par l'aimant principal. Il en résulte alors une configuration de capteur qui est encombrante et chère comme celle décrite dans la solution, à savoir l'utilisation de 2 circuits imprimés.

Soulignons également que l'emploi d'un grand nombre de paires de pôle sur le capteur principal comme le requiert la solution, se traduit par une fréquence électrique vue par la sonde, lors de la rotation de l'arbre tournant, qui peut provoquer un glissement important entre la position indiquée par l'électronique et la position vraie ou une perte de résolution du fait des limitations de bande passante des circuits de traitement utilisés. D'autre part, plus le nombre de pôles est important, plus il va être difficile d'obtenir une position absolue précise sur ce type de capteur multitour.

En effet, prenant le cas d'un capteur 30 pôles, comme celui décrit dans la demande de brevet EP 1 830 155, on obtient un aimant de longueur angulaire de 12° (360/30) sur lequel la position donnée par le capteur d'entrée sera précise. Cependant le capteur secondaire doit donner la position sur +/- 1 tour (+/- 360°) ce qui induit, pour un capteur de précision +/-0.5%, une erreur de +/- 3.6° sur la position angulaire d'entrée. Cela représente déjà une erreur correspondant à 60% de la longueur angulaire. Si on ajoute, à cette erreur, l'hystérésis magnétique et mécanique du capteur secondaire, le risque de perdre l'information absolue est alors très grand.

Si on souhaite désormais créer un capteur +/- 2.5 tours (+/- 900°) alors pour un capteur secondaire de précision +/-0.5%, une erreur de +/- 9° est générée sur la position angulaire d'entrée. On comprend alors que le capteur secondaire dont l'erreur intrinsèque de non-linéarité (or phénomène d'hystérésis) est déjà de 18° et n'est alors plus capable de discriminer dans quel pôle de 12° se trouve le capteur d'entrée. Certes, le capteur décrit dans la demande de brevet EP 1 830 155 est encore absolu, mais ce n'est plus un capteur de position absolue et précis dans le même temps. Si on souhaitait redonner au capteur secondaire sa fonction absolue alors il devrait avoir une précision inférieure à +/-0.34%, ce qui signifie qu'il nous faudrait une bague multipolaire avec 20 pôles, ce qui ne permet pas de s'orienter vers un capteur principal précis pour les raisons évoquées plus haut. Pour une telle configuration de capteur +/-2.5 tours le capteur décrit dans la demande de brevet EP 1 830 155 propose l'emploi d'une troisième sonde et la mesure relative du décalage qui se crée entre le second capteur et le troisième capteur, ce qui complexifie grandement la solution.

Un défaut majeur de la solution est donc soit la grande précision qui est exigée du capteur secondaire dans l'exemple précité du fait de la nécessité que l'aimant principal présente un grand nombre de paires de pôles, soit un faible nombre de paires de pôles si on souhaite soulager cette demande de précision sur le capteur secondaire. Or, il est reconnu que ces types de capteurs magnétiques de position peuvent être soumis à des influences magnétiques extérieures notables à commencer par celles venant de l'aimant multipolaire du capteur d'entrée. Il est donc très difficile de maintenir de telles précisions dans les environnements typiques de ceux d'un véhicule. L'homme de métier est alors conduit vers la seconde option mais elle ne permet pas de s'orienter vers des configurations génériques de capteur principal précis sauf à réduire le diamètre de la bague ou à augmenter l'entrefer de détection ce qui nous ramène alors aux problématiques précédentes.

Enfin, l'emploi d'une AMR pour le capteur de tours (celui donnant la position absolue) implique également d'avoir un signal de sortie absolue ayant une périodicité de 180°, c'est-à-dire 0.5 tour si on utilise un aimant bipolaire. Cela implique un plus grand rapport de réduction qui devra être de 8 pour une course de +/- 2 tours contre 4 pour un capteur secondaire qui donnerait une position absolue sur 360° d'angle mécanique. L'encombrement d'une telle transformation de mouvement sera donc plus grand que si le capteur secondaire travaillait sur 1 tour.

On connait aussi, dans l'art antérieur, les solutions de capteur de couple associées à l'utilisation d'un capteur multitour.

La demande de brevet WO2005/076860 présente une structure de capteur de couple et position absolue multitour avec 2 inconvénients majeurs. D'une part, elle est encombrante car est constituée, en fait, de 2 capteurs distincts, l'un étant superposé à l'autre. D'autre part la position absolue du capteur de position multitour est faite via une transformation de mouvement discrète qui ne permet pas de maintenir une position absolue de l'arbre d'entrée en cas de défaut sur le capteur principal.

Dans la demande de brevet WO2009/047401, même si le problème de la mesure discrète de la position multitour est résolu, l'association des 2 capteurs reste encombrante car réalisée par empilement des fonction capteur de couple et capteur de position multitour et le capteur principal étant de type absolu sur un tour, il est constitué d'un aimant bipolaire qui génère une perturbation magnétique importante sur les sondes de Hall constitutives du capteur de couple conférant en plus à l'ensemble un défaut de précision.

La présente invention se propose de résoudre ces problématiques grâce à une solution générique et compacte de capteur de position multitour précis qui passe par une adaptation du nombre de paires de pôles de l'aimant principal situé au rotor d'entrée qui est fonction du rapport de réduction de la transformation de mouvement à laquelle le rotor d'entrée est associé et à la précision globale du capteur secondaire, tout en tenant compte de la capacité d'intégration à un capteur de couple.

L'homme de métier, comme le réflexe de recherche de précision l'y pousserait, chercherait, à la lumière des documents antérieurs cités, à multiplier toujours plus le nombre de pôles du rotor principal.

L'adaptation du nombre de paires de pôles de l'aimant principal permet au capteur de conserver son caractère précis et multitour en soulageant la précision requise sur le capteur secondaire. D'une part, l'emploi, sur le capteur principal, de sondes magnétosensibles de type à effet Hall à détection de direction de champ intégrant une correction de gain relative entre les composantes magnétiques ou de type magnétorésistives en association à des concentrateurs ferromagnétiques confère au capteur une précision intrinsèque qui ne nécessite aucune électronique de correction supplémentaire. L'ensemble de ces éléments permet alors de conférer un caractère générique au capteur selon l'invention. D'autre part, la transformation de mouvement est reliée à un capteur secondaire absolu, situé sur le dernier étage de réduction de la transformation mécanique. Cette transformation de mouvement ainsi que les 2 sondes sont alors intégrées dans le volume du rotor principal conférant au capteur une compacité telle que recherchée par les applications visées.

**Le** capteur selon l'invention reste capable de livrer une position absolue précise à l'allumage, il est ce qu'on appelle « true power on ».

La présente invention propose aussi de régler les problématiques de compacité et précision des capteurs de couple en proposant une intégration mécanique du capteur de position relative des 2 arbres plus compacte permise d'une part grâce à l'emploi d'un aimant principal de type multipolaire qui génère une perturbation magnétique faible sur l'ensemble de la structure du fait d'un rebouclage plus court des lignes de champ émanant de l'aimant principal et d'autre part grâce au positionnement de la transformation de mouvement sensiblement dans la tranche de volume occupé par l'aimant principal. Dès lors, l'aimant principal du capteur de position, de par son caractère multipolaire, est intégré à l'intérieur du capteur de couple de manière concentrique limitant ainsi, sur le volume extérieur, son interaction avec la partie collectrice du capteur de couple et sur le volume intérieur son interaction avec les dents des stators. On notera qu'une aimantation de type sinusoïdale multipolaire à l'aimant principal permet avantageusement de limiter encore plus voire annuler la perturbation magnétique induite par l'aimant dans son volume intérieur sur la partie statorique de par l'absence de flux magnétique sur le diamètre intérieur de l'aimant. Néanmoins, quelque soit le type d'aimantation retenue pour l'aimant principal, dans le but d'annuler l'interaction de l'aimant principal sur la partie statorique du capteur de couple on pourra avantageusement associer l'aimant principal à une armature ferromagnétique.

La présente invention concerne plus particulièrement un dispositif de détection magnétique de position absolue d'un arbre d'entrée en rotation constitué :

d'un rotor principal comprenant un aimant principal solidaire du dit arbre d'entrée effectuant une course de n fois 360°, n étant supérieur à 1, et d'un organe menant d'une transformation de mouvement,
d'au moins une première sonde magnétosensible délivrant, sur un angle magnétique de 360 degrés, un signal proportionnel à la direction du champ magnétique généré par l'aimant principal dans le but de déduire une mesure de position absolue de l'arbre d'entrée,
d'un aimant secondaire présentant 2 pôles magnétiques et effectuant une course voisine de 360 degrés sous l'effet de la rotation de l'arbre d'entrée via la transformation de mouvement,

d'au moins une seconde sonde magnétosensible délivrant, sur un angle magnétique voisin de 360 degrés, un signal proportionnel à la direction du champ magnétique généré par l'aimant secondaire et apte à en déduire une mesure de position absolue de l'aimant secondaire,

la seconde sonde et l'aimant secondaire constituant un capteur de position de précision epsilon, exprimé en pourcent,

l'aimant secondaire étant sensiblement positionné à l'intérieur de la hauteur H définie par les plans supérieur et inférieur du rotor principal,

caractérisé en ce que l'aimant principal est multipolaire et présente P paires de pôles, avec P supérieur à 1.

Le dispositif de détection magnétique de position absolue et multitour proposé est constitué de 2 capteurs magnétiques dont l'un, dit capteur de position principal, est lié au rotor d'entrée et fournit une position précise de position sur une période magnétique correspondant à une rotation du rotor d'entrée d'un angle mécanique équivalent à 1 paire de pôles de la bague multipolaire et l'autre, dit capteur de position secondaire qui confère une position absolue non nécessairement précise au capteur de la présente invention, est lié au dernier étage de réduction de la transformation de mouvement intercalée entre le capteur principal et le capteur secondaire tel que η=θ/α avec θ l'angle du capteur d'entrée (strictement supérieur à 0) et α l'angle du capteur secondaire.

Ainsi, l'association de 2 mesures d'angles reliées par la relation n=θ/α permet d'obtenir un capteur multitour de position absolue et précis qui ne nécessite qu'une électronique rudimentaire pour définir la position via les signaux générés par les 2 capteurs mais aucun algorithme de correction ou d'apprentissage et stockage des erreurs du ou des capteurs principal et secondaire.

On peut citer de manière non limitative au cadre de l'invention les transformations de mouvement qui peuvent être employées : celles dites à train d'engrenages parallèles ou celles à roue et vis et enfin celles par couplage magnétique de roue multipolaire. La transformation de mouvement prend place dans une tranche de l'espace sensiblement comprise dans la tranche contenant l'aimant principal. Le premier étage de réduction est intégré concentriquement à l'aimant dans le but de réduire l'encombrement axial. L'étage de réduction peut être surmoulé à coté de l'aimant ou sur l'aimant. Dans le cadre d'une transformation de mouvement sans contact, l'aimant principal pourra constituer avantageusement le premier étage de réduction de la transformation.

L'aimant secondaire du capteur de position sera préférentiellement aimanté de manière bipolaire. Il peut délivrer une information de position absolue continue de 0° à 360° d'angle de rotation de l'axe du capteur secondaire. La course utile du capteur sera idéalement voisine de 360° correspondant sensiblement à un angle de rotation de 360xn du rotor d'entrée, « n » pouvant être non entier mais supérieur à 0. Rien n'empêche l'application de la présente invention sur un angle α inférieur à 360° avec pour conséquence un rapport de réduction plus important entre l'arbre d'entrée et l'arbre de sortie. L'aimant de ce capteur secondaire peut être un cylindre aimanté diamétralement ou suivant 2 pôles aimantés selon l'épaisseur du cylindre ou encore un parallélépipède aimanté suivant l'une de sa largeur ou sa longueur, associé à la sonde située sur l'axe de révolution de l'aimant. On peut aussi imaginer une bague creuse aimantée diamétralement en association avec une sonde positionnée en dehors de l'axe de révolution de l'aimant. Ces exemples de configurations cités sont non limitatifs du design magnétique d'un capteur de position absolue sur 360°. Dans certains cas d'exigence de précision ou de recherche de compacité, un blindage peut être intégré au voisinage de l'aimant secondaire.

La combinaison logique des 2 informations de position permet d'en déduire une information de position précise et absolue sur plusieurs tours d'un axe mécanique.

L'aimant principal lié au rotor d'entrée a pour vocation de donner une mesure d'angle précise de périodicité « T » dont la précision correspond à la précision souhaitée par l'application. Il délivre donc un signal fin. L'aimant peut être une bague ou un disque. Selon une première variante, son aimantation sera de type multipolaire radialement traversante pour une bague ou axialement traversante pour un disque. La sonde associée au capteur principal est positionnée dans le plan médian de l'aimant ou décalée axialement dans le cas d'une bague ou sur le diamètre moyen ou décalée radialement dans le cas d'un disque. De manière préférentielle, elle exploitera les composantes tangentielle et radiale ou tangentielle et axiale dans le cas d'une sonde de Hall ou directement l'angle magnétique entre les composantes tangentielle et radiale ou tangentielle et axiale dans le cadre de l'utilisation d'une sonde magnétorésistive couplée à des concentrateurs de champ.

La sonde associée à l'aimant secondaire lit également 2 des 3 composantes magnétiques pour une détection de type Hall ou l'angle magnétique formé par 2 des 3 composantes lorsqu'on utilise une magnétorésistance.

L'aimant secondaire et la sonde qui lui est associée constituent un capteur de position angulaire de précision +/- epsilon (ε), exprimé en pourcent. Ainsi si la précision du capteur secondaire est de +/-0.5% sur 360° de rotation de l'arbre du capteur secondaire alors cela signifie que l'erreur angulaire ramenée à l'angle de rotation de l'arbre d'entrée est +/-0.5% de 360xn. Prenons l'exemple d'un capteur +/-3 tours, le capteur secondaire ainsi défini générera une erreur de +/-10.8°.

Selon l'invention, l'aimant multipolaire principal associé à une sonde de détection d'angle magnétique de 360° devra comporter une période minimale T, exprimée en degré :

$$T > 2 . \frac{\varepsilon}{100} . 360 . n$$

Et le nombre de paires de pôles P de l'aimant principal est borné et défini par (E[x] désignant la partie entière de x):

$$P < E\left[{}^{50}\!/_{\varepsilon . n}\right]$$

Le nombre minimal étant supérieur strictement à 1 paire de pôles.

Dans le cadre d'un capteur 6 tours, et d'une précision du capteur secondaire de +/-0.5% utilisant une mesure sur un angle magnétique de 360°, ε vaut 0.5, n vaut 6 et le rotor principal comportera 16 paires de pôles, soit 32 pôles magnétiques adjacents au maximum.

Si la sonde de détection était de type AMR comme le propose la demande de brevet EP 1 830 155 A1, l'angle de détection magnétique est alors de 180° et se fait donc sur un seul pôle. Dans ce cas le nombre maximal de périodes T, exprimé en degré, s'écrit alors :

$$T > 4 . \frac{\varepsilon}{100} . 360 . n$$

Et le nombre maximal de paires de pôles de l'aimant principal est alors :

$$P < E\left[{}^{25}\!/_{\varepsilon . n}\right]$$

Pour un capteur 4 tours et une sonde de 180°, le rotor principal est constitué d'un maximum de 12 paires de pôles si le capteur secondaire possède une précision de +/-0.5%. Pour un capteur 6 tours, l'aimant principal selon l'invention présentée ici comporte au maximum 8 paires de pôles, soit 16 pôles magnétiques adjacents au maximum. On voit ainsi que selon l'invention proposée, même en utilisant une détection de type AMR, le nombre de paires de pôles à l'aimant principal doit rester faible.

Dans certains cas, l'amplitude de l'hystérésis du dispositif de détection, exprimé en degré et noté Hyst, et ramené à l'arbre d'entrée, d'origine magnétique et mécanique peut devenir important du fait par exemple d'un frottement notable généré par la transformation de mouvement. Ainsi selon l'invention, l'aimant multipolaire principal associé à une sonde de détection d'angle magnétique de 360° devra comporter une période minimale T, exprimé en degré :

$$T > 2 . \frac{epsilon}{100} . 360 . n + Hyst$$

Et le nombre maximal de paires de pôles P de l'aimant principal est (E[x] désignant la partie entière de x):

$$P < E\left[{}^{360}\!/_{T}\right]$$

Le nombre minimal est supérieur strictement à 1 paire de pôles.

Selon un mode de réalisation particulier, l'aimant principal est inscrit dans le volume intérieur de l'organe menant.

Selon un mode de réalisation particulier, les P pôles sont à aimantation sinusoïdale.

Selon un autre mode de réalisation particulier, les P pôles sont à aimantation radiale.

Selon un autre mode de réalisation particulier, les P pôles sont à aimantation graduellement saturé.

L'aimant principal, qu'il soit aimanté radialement, sinusoïdalement ou graduellement saturé, peut être associé à une armature ferromagnétique sur sa surface correspondant à la surface opposée à la surface de lecture des sondes. Elle pourra ainsi, le cas échéant, isoler magnétiquement l'aimant principal d'une éventuelle interaction avec un dispositif additionnel magnétosensible. Cependant, la spécificité d'une aimantation sinusoïdale permettant de concentrer le flux magnétique sur la périphérie extérieure (ou intérieure) de l'aimant, peut avantageusement permettre de ne pas utiliser une telle armature.

Une aimantation multipolaire sinusoïdale ou une aimantation multipolaire radiale graduelle en champ de saturation, permet d'avoir un flux magnétique sensiblement sinusoïdal à la surface de l'aimant quel que soit l'entrefer et le nombre de paires de pôles, à la différence d'une classique aimantation multipolaire alternée de type radial. On trouve, dans le brevet EP1989505, tous les enseignements concernant la réalisation et l'utilisation d'un tel mode d'aimantation. L'aimantation traversante graduellement saturée est caractérisée par un vecteur aimantation dont la direction est radiale pour un bague ou axiale pour un disque, de sens alternativement orienté vers l'axe de la bague ou vers l'extérieure pour une bague et de la surface inférieure vers la surface extérieure ou de la surface extérieure vers la surface inférieure pour un disque, selon la polarité des pôles et dont l'amplitude varie sensiblement linéairement depuis 100% de la saturation à 0%.

Selon un mode de réalisation particulier, le dispositif de détection magnétique de position est associé à une électronique qui, au moyen des signaux des 2 sondes magnétosensibles, permet de déduire logiquement une position absolue précise de l'arbre d'entrée.

Selon un mode de réalisation particulier, la seconde sonde et l'aimant secondaire comportent un blindage sous la forme d'une pièce ferromagnétique positionnée au voisinage de l'aimant secondaire.

Selon un mode de réalisation particulier, les sondes magnétosensibles, positionnées au voisinage de la surface aimantée de l'aimant, sont de type à effet Hall (par exemple de la société MELEXIS de type MLX90333 ou MLX90316 ou encore MLX91204, ou de la société MICRONAS de type HAL3625...) capables de fournir, chacune, soit 2 signaux distincts B1 et B2 représentatifs de 2 des 3 composantes magnétiques générées par l'un ou l'autre des aimants principal et secondaire qui seront exploitées par la suite par un microcontrôleur, soit directement un signal électrique représentatif de l'angle mécanique de rotation en intégrant un calcul d'arc-tangente du rapport des 2 composantes magnétiques lues après multiplication de l'une d'elle par un gain.

Partant des deux composantes de champ magnétique (tangentielle à l'aimant et normale ou axiale à l'aimant en fonction de l'orientation de la sonde), l'angle magnétique réel est calculé par l'arctangente des deux composantes considérées. Lorsque les amplitudes des deux composantes ne sont pas égales, l'angle du champ magnétique ainsi mesuré par ce calcul diffère de l'angle de rotation dit « électrique » et égal à l'angle de rotation mécanique divisé par le nombre de paires de pôles P.

Selon un mode de réalisation particulier, lesdites sondes sont aptes à calculer l'angle électrique β après multiplication d'un des 2 signaux B1 et B2 par un gain G tel que

$$\beta = \text{Arctang}\left(\frac{G.B1}{B2}\right)$$

Selon un mode de réalisation particulier, les sondes magnétosensibles sont de type magnétorésistive.

Dans le cas de sondes magnétorésistives elles pourront avantageusement être associées à des concentrateurs ferromagnétiques dont la fonction est de rendre linéaire la variation d'angle magnétique vue par la sonde. Ce type d'ensemble sonde et concentrateurs est déjà décrit dans la demande de brevet de la demanderesse WO 2010/046550 A1. On peut également envisager l'utilisation de ces pièces ferromagnétiques avec des sondes de type Hall dans le même but d'égalisation des amplitudes des 2 composantes magnétiques exploitées.

Selon un mode de réalisation particulier, au moins une des sondes magnétosensibles est associée à un concentrateur de flux.

Selon un mode de réalisation particulier, l'aimant principal est associé à au moins 2 sondes magnétosensibles.

On peut en effet imaginer doubler les sondes à proximité de l'un, ou l'autre, ou les deux aimants dans le but soit de réaliser un capteur redondant soit d'augmenter la précision du capteur ou de baisser sa sensibilité aux champs extérieurs. L'augmentation de précision ou la meilleure robustesse aux champs perturbateurs peuvent en effet être obtenues via les 2 sondes associées à chaque capteur lorsqu'elles seront avantageusement positionnées à 90° électrique l'une de l'autre. Chacune des 2 composantes magnétiques, sera alors obtenu par une composition algébrique de 2 composantes magnétiques chacune issu d'une des 2 sondes. Un exemple de composition et d'utilisation d'une telle configuration est donné dans la demande de brevet WO2009101270.

Selon un mode de réalisation particulier, lorsque l'on double les sondes à proximité d'un aimant, ces 2 sondes magnétosensibles sont décalées angulairement d'un angle égal i.360/P+90/P degrés avec P le nombre de paires de pôles et i un entier naturel qui peut être nul.

Dans une autre forme de réalisation le dispositif de détection magnétique de position absolue selon l'invention comprend un dispositif de détection de la rotation relative entre 2 arbres dit « capteur de couple » tel qu'on en trouve habituellement sur la direction assistée électrique d'un véhicule. Ce capteur de couple ainsi formé peut être du type de celui revendiqué dans les brevets ou demande de brevets de la demanderesse EP1269133 et EP1774272. Le capteur de couple est constitué d'une structure statorique reliée à l'un des 2 arbres de la colonne de direction. Un aimant est associé à l'autre arbre. L'angle de rotation relative entre les 2 arbres vaut typiquement de +/-0.5° à +/-10°. Une troisième partie magnétique fixe par rapport aux 2 autres entités en rotation collecte et concentre un flux magnétique émanent de la partie statorique et est chargée de mesurer la variation d'angle relatif entre les 2 arbres au moyen d'au moins une sonde à effet Hall. Les 2 arbres peuvent avoir ensemble un déplacement angulaire par rapport à la structure de collection et de concentration du flux. La rotation des 2 arbres peut se faire sur plusieurs tours mais plus typiquement de +/- 0.5 tours à +/-4 tours.

L'invention concerne particulièrement un dispositif de détection magnétique de position absolue et notamment destiné à la détection de la torsion d'une colonne de direction, comprenant :

au moins un dispositif de détection de la position angulaire relative d'un arbre d'entrée et de sortie coaxiaux reliés par une barre de torsion pour en déduire le couple de torsion exercée sur la barre, constitué d'une première structure magnétique rotorique comprenant une pluralité d'aimants, d'une seconde structure, statorique au voisinage de laquelle est placée au moins une sonde magnéto sensible, l'aimant principal étant sensiblement concentrique à la structure statorique, caractérisé en ce que ladite sonde magnétosensible du dispositif de détection de la position angulaire relative et les première et seconde sondes sont sensiblement positionnées à l'intérieur de la hauteur définie par les plans supérieur et inférieur du rotor principal.

Selon un mode de réalisation particulier, la structure statorique est constituée d'au moins une partie ferromagnétique et d'un support plastique.

Selon un mode de réalisation particulier, la partie ferromagnétique, l'aimant principal multipolaire du capteur de position et l'organe menant de la transformation de mouvement sont intégrés au support plastique.

Selon un mode de réalisation particulier, une bague ferromagnétique est intercalée entre l'aimant principal multipolaire et la structure statorique du capteur de couple.

Selon un mode de réalisation particulier, l'organe menant de la transformation de mouvement et le support plastique sont une même pièce.

Selon un mode de réalisation particulier, le support plastique surmoule l'aimant principal multipolaire.

Selon un mode de réalisation particulier, le nombre P' de paires de pôles magnétique de la pluralité d'aimants du capteur de couple est égal à k fois le nombre P de paires de pôles magnétique de l'aimant principal, k étant entier.

Selon un mode de réalisation particulier, le nombre P de paires de pôles magnétique de l'aimant principal est égal à k fois le nombre P' de paires de pôles magnétique de la pluralité d'aimants, k étant entier non nul.

En effet, si P et P' sont reliés par un coefficient de proportionnalité, cela assure une influence minimale du capteur de couple sur le capteur de position et vice-versa.

Les constructions mécaniques possibles du capteur sont à axe traversant mais rien n'empêche l'application du principe dans une configuration dite en bout d'axe.

D'autre part, même si les réalisations montrées jusqu'ici représentent toutes des capteurs rotatifs, il est envisageable d'appliquer cette invention au cas des capteurs de positions linéaires à grandes courses (typiquement de quelques dizaines de millimètre). Dans ce cas, un axe en déplacement linéaire engrène via une transformation de mouvement sur le rotor principal du capteur selon l'invention transformant ainsi la grande course linéaire en course angulaire multitour.

De même, on peut imaginer associer un axe en déplacement linéaire associé à un aimant plat de type rectangulaire ou barreau présentant une aimantation multipolaire qui engrène via une transformation de mouvement de type linéaire-rotatif ou linéaire-linéaire sur un aimant délivrant une information absolue sur une course d'amplitude réduite d'un rapport correspondant au rapport de réduction de la transformation de mouvement.

L'invention sera mieux appréhendée par le support des figures suivantes :

Figure 1 : Dévoile l'évolution de l'angle magnétique selon l'angle mécanique pour une configuration non adaptée de positionnement de la sonde magnétosensible selon l'art antérieur.

Figure 2: Dévoile l'évolution de l'angle magnétique selon l'angle mécanique pour une configuration adaptée de positionnement de la sonde magnétosensible selon l'art antérieur.

Figure 3 : Mode de réalisation préféré de l'aimant principal suivant une aimantation sinusoïdale.

Figure 4a, 4b, 4c : Vues éclatées, de face et de côté du capteur de position magnétique multitour sans contact à axe traversant selon l'invention selon une variante possible intégrant une transformation roue et vis.

Figure 5 : Représentation isométrique d'une des variantes de réalisation de l'ensemble constitué de l'aimant principal de l'organe menant de la transformation de mouvement et de la sonde de mesure associée, du capteur de position magnétique multitour sans contact à axe traversant selon l'invention.

Figure 6 : Schéma de principe de fonctionnement du capteur selon un premier mode de réalisation avec ses 2 signaux, précis et absolu, émanant de chacune des 2 sondes.

Figure 7 : Schéma de principe de fonctionnement du capteur selon un deuxième mode de réalisation avec ses 2 signaux, précis et absolu, émanant de chacune des 2 sondes.

Figure 8 : Vues schématiques d'une version de capteur selon l'invention sur la base d'un aimant principal de type disque.

Figure 9a, 9b, 9c et 9d : Dévoilent les composantes magnétiques radiale et tangentielle ainsi que l'évolution de l'angle électrique et la non-linéarité de ce dernier selon l'angle mécanique pour une configuration d'aimantation radiale et une configuration d'aimantation sinusoïdale selon l'invention.

Figure 10 : Propositions de construction mécanique d'un capteur de rotation relative entre 2 arbres dit capteur de couple associé à un capteur magnétique de position multitour absolue précise selon une configuration possible selon l'invention.

Figure 11 : Propositions de construction mécanique d'un capteur de rotation relative entre 2 arbres dit capteur de couple associé à un capteur magnétique de position multitour absolue précise selon une autre configuration possible selon l'invention.

Figure 12 : Vue isolée d'un mode de réalisation d'un capteur de rotation relative entre 2 arbres dit capteur de couple associé à un capteur magnétique de position multitour absolue précise.

Figure 13 : Illustration, sur une mesure, de la notion d'hystérésis.

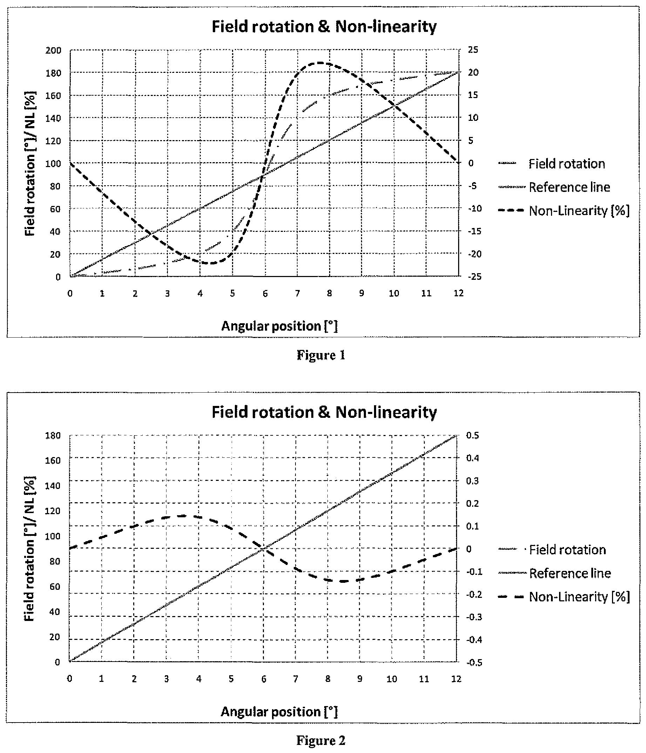

La figure 1 présente les résultats de non-linéarité et de rotation de champ obtenu avec un capteur suivant le document de l'art antérieur EP 1 830 155, partant sur l'exemple d'une bague avec 30 pôles, de 5 mm de haut, avec un diamètre extérieur de 40mm et un diamètre intérieur de 36mm (avec culasse). Cet exemple montre particulièrement les défauts de l'art antérieur. Pour un décalage axial de 1 mm, le rapport des composantes tangentielle qui sont utilisées pour calculer la position angulaire est alors de Bt/Bz = 5 à 2 mm de distance de mesure. La courbe grise, en trait mixte interrompu, montre l'évolution de l'angle magnétique vu par le sonde magnétosensible associée au rotor principal et en trait noir interrompu l'erreur importante de position de +/-22% sur les 12° de course, soit +/- 2.6° résultant de l'utilisation d'une telle configuration d'aimant sans recherche préalable de la position axiale optimale de la sonde par rapport au plan médian situé à mi-hauteur de l'aimant.

En figure 2, sont présentés les résultats obtenus, sur le même capteur, avec un décalage axial de la sonde principale de 4 mm par rapport à l'axe de la bague. Le rapport des composantes tangentielle (Bt) et axiale (Bz) devient alors Bt/Bz=1.09 à 2 mm de distance de mesure, ce qui provoque une erreur de position beaucoup plus acceptable de +/-0.14% sur les 12° de course soit +/- 0.017°. Cette position spécifique axiale est optimale mais peu robuste et, étant donné qu'on travaille sur un flux de fuite pour la composante axiale, implique, pour disposer d'un flux de travail acceptable de 250 G vu par la sonde, une remanence d'aimant de 1T pour la bague et donc un aimant NdFeB ou SmCo de type fritté avec l'inconvénient de prix que cela représente. D'autre part, le décalage axial nécessaire devient vite problématique pour des raisons soit d'encombrement soit de sensibilité aux perturbations magnétiques induites par l'aimant secondaire si on souhaite maintenir la compacité du capteur.

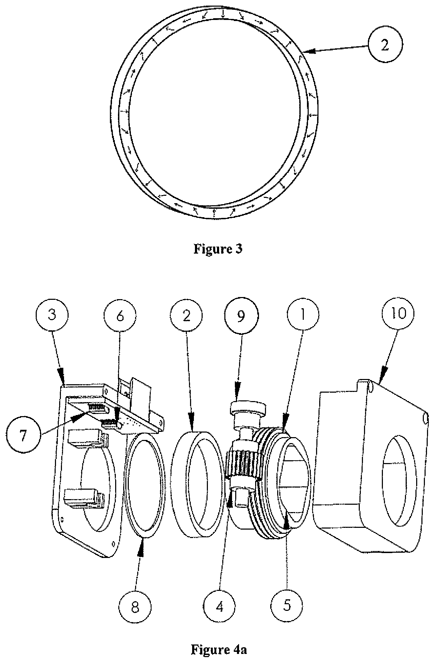

La figure 3 présente un mode de réalisation préféré de l'aimant principal (2) selon une réalisation dites « sinusoïdale ». Dans ce cas, la direction d'aimantation est tournante à l'intérieur de l'aimant, à la manière déjà décrite dans le brevet EP1989505.

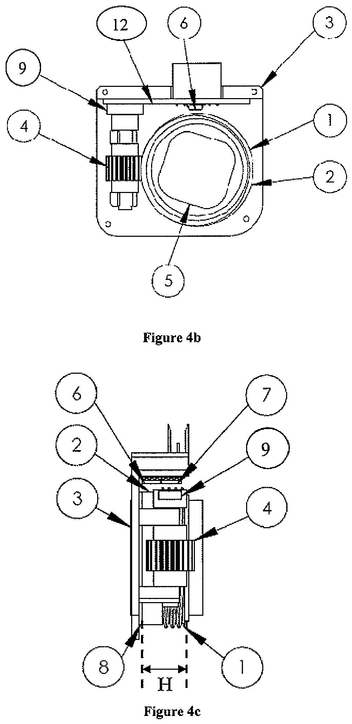

En figures 4a, 4b et 4c, on retrouve un exemple de conception mécanique du capteur selon l'invention. A l'intérieur du boitier (10) fermé par le couvercle (3), on trouve le rotor principal (5) lié à l'arbre d'entré sur lequel la transformation de mouvement composée de l'organe menant (1) est intégré. L'aimant multipolaire principal (2) est associé à la vis. La première sonde magnétosensible (6) lit et interprète les variations des composantes magnétiques et de l'angle magnétique générées par l'aimant principal lors de la rotation de l'arbre d'entrée. Le pignon-arbré (4) engrène sur la vis et intègre en son extrémité un aimant secondaire (9) dont les composantes magnétiques et l'angle magnétique varient lors de la rotation du dit pignon-arbré et sont lues par la seconde sonde (7). Une entretoise (8) ou tout autre moyen équivalent permet éventuellement de venir ajuster la mécanique de la transformation de mouvement dans le but de minimiser le jeu dans cette dernière. La configuration présentée n'est pas limitative des intégrations mécaniques qui peuvent être envisagées selon l'invention puisque comme il a été cité, on peut par exemple imaginer une transformation de mouvement réalisée au moyen d'un train d'engrenages à axes parallèles. D'autre part, le circuit imprimé (12) support des sondes (6) et (7) peut être parallèle au plan de l'aimant (2) coupant ce dernier en deux suivant sa hauteur. L'ensemble ainsi réalisé est axialement compact grâce à une localisation de l'aimant secondaire positionné à l'intérieur de la hauteur définie par les plans supérieur et inférieur du rotor principal (5).

La figure 4c permet particulièrement d'apprécier la compacité du dispositif. La hauteur H définie par les plans supérieur et inférieur du rotor principal (5) formé de l'aimant principal (2) et l'organe menant (1).

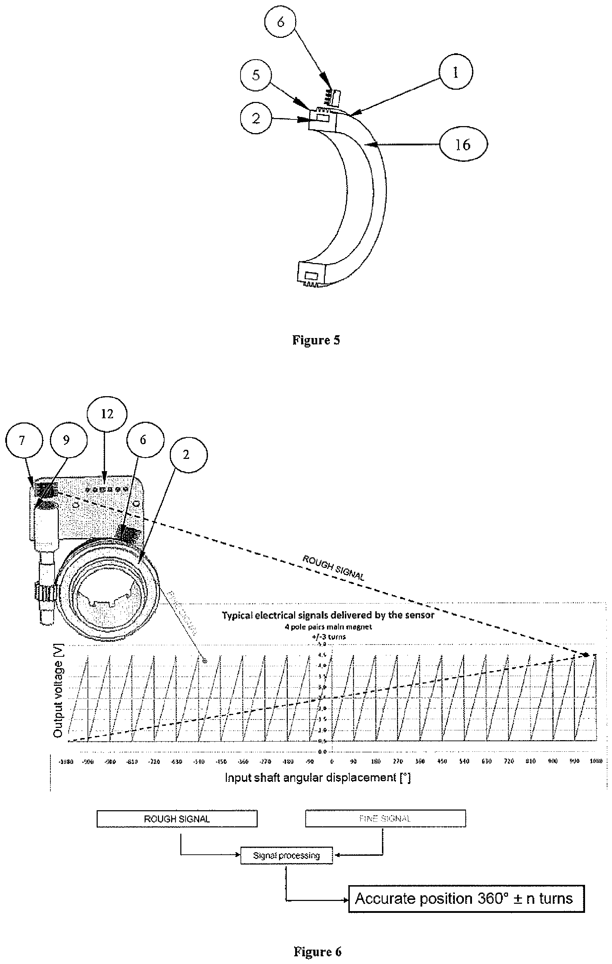

En figure 5 on présente une variante de réalisation de l'invention et plus particulièrement du rotor principal (5) avec l'organe menant (1) de la transformation de mouvement, formé dans un support plastique (16) qui est surmoulé sur l'aimant principal (2). Dans une autre variante non représentée, utilisant une transformation de type train d'engrenages à axes parallèles, le premier étage pourrait être une roue dentée surmoulé. Il est important de souligner que l'ensemble revêt un caractère encore plus compact en proposant, comme revendiqué, une localisation de l'aimant secondaire (9) à l'intérieur de la hauteur définie par les plans supérieur et inférieur du rotor principal (5).

La figure 6 montre le principe de fonctionnement du capteur multitour de l'invention. La périodicité du signal généré par la première sonde (6) détectant le champ magnétique généré par l'aimant principal (2) au cours de sa rotation sur les +/- n tours est appelé « fine signal » avec un profil typiquement en dents de scie. Sur cet exemple, la périodicité est de 90° soit 8 pôles magnétiques à l'aimant principal pour un exemple de capteur +/-3 tours. La courbe « rough signal» donne le signal absolu sur +/-3 tours généré par la seconde sonde (7) généré par l'aimant secondaire (9) du capteur absolu multitour ainsi constitué. Chacun des 2 signaux est ici représenté via une variation analogique entre 0.5 V et 4.5 V du signal électrique. On peut imaginer des variations de type PWM, SENT sans que ces autres exemples soient limitatifs. De même le nombre de tours ou le nombre de pôles de l'aimant principal ne sont pas limités à cet exemple.

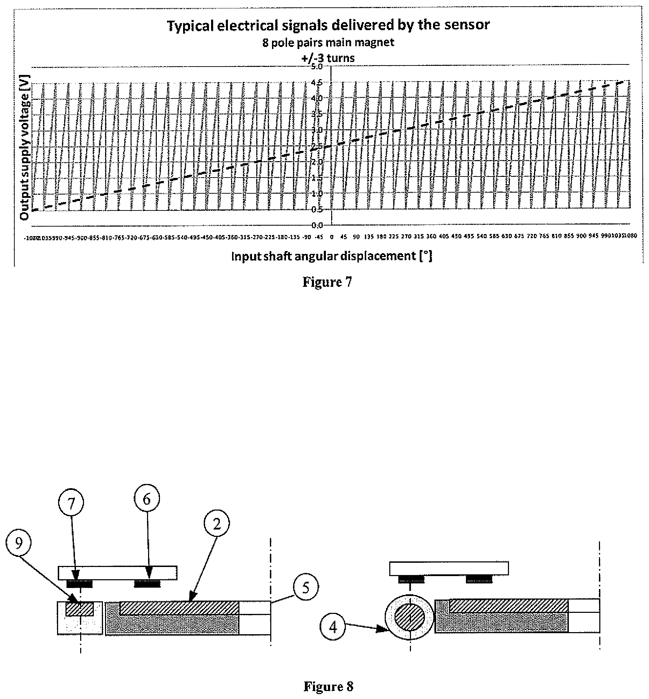

En figure 7, on illustre d'ailleurs les résultats obtenus avec un aimant bague 16 pôles aimantés radialement pour un capteur de +/-3 tours.

La figure 8 illustre une variante de l'invention qui consiste à faire appel à un disque multipolaire en tant qu'aimant principal (2). On propose, sans que cela ne soit limitatif pour l'invention, 2 configurations qui reposent, l'une sur l'emploi d'une transformation de type roue et vis, et l'autre sur l'emploi d'une transformation à train d'engrenages parallèles. L'aimant secondaire (9) est positionné à l'intérieur de la hauteur définie par les plans supérieur et inférieur du rotor principal (5). La réalisation est ainsi une construction axialement compacte.

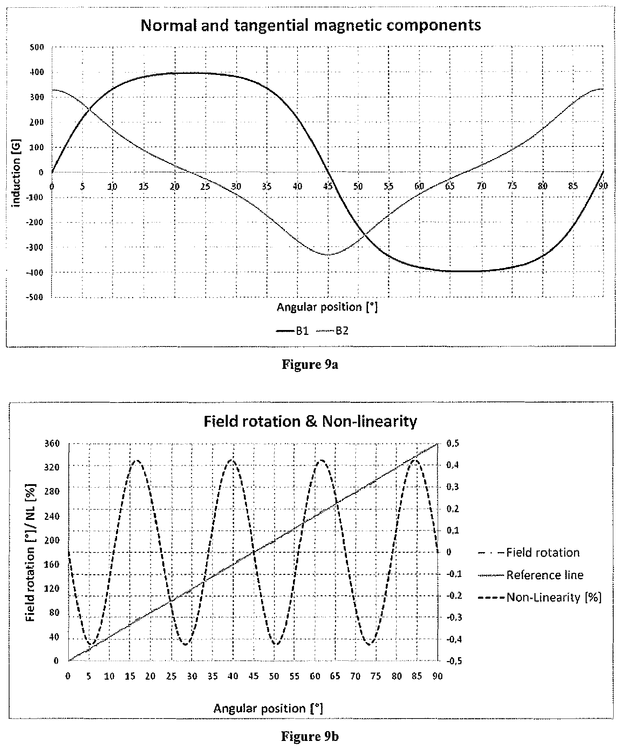

Sur la figure 9a, on présente les composantes d'induction radiale et tangentielle obtenues avec l'exemple d'une bague avec 8 pôles aimantés radialement, de 5 mm de haut, avec un diamètre extérieur de 40mm et un diamètre intérieur de 36mm (avec culasse). Le rapport des composantes est Br/Bt=1.2 à 4 mm de distance de mesure. Bien que les composantes présentent des profils non sinusoïdaux, l'utilisation d'un gain G de 0.42 permet de linéariser la variation de l'angle électrique selon le déplacement angulaire mécanique.

Sur la figure 9b, la courbe grise, en trait mixte interrompu, montre l'évolution de l'angle magnétique vu par le sonde magnétosensible (6) associée au rotor principal (5) et en trait noir interrompu l'erreur de position de +/-0.42% sur les 90° de course, soit +/- 0.38° résultant de l'utilisation d'une telle configuration d'aimant.

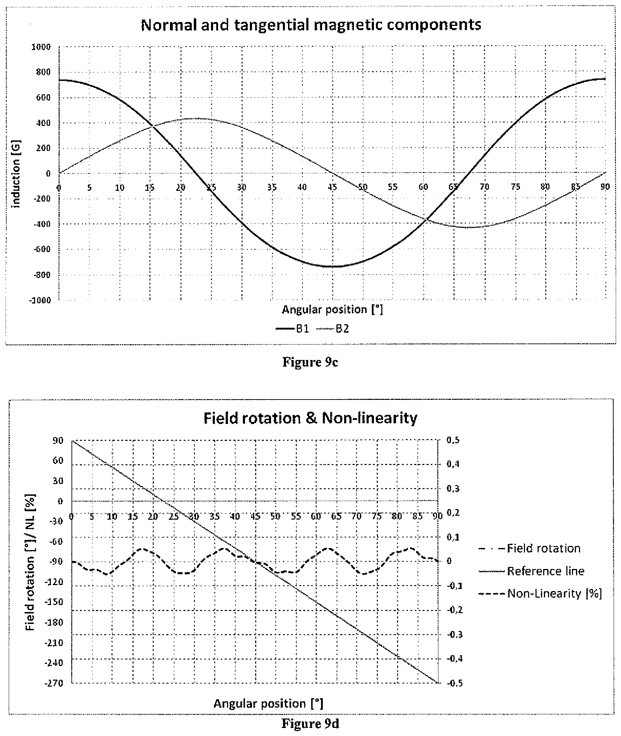

Sur la figure 9c, on voit les composantes radiale et tangentielle obtenues avec l'exemple d'une bague avec 8 pôles aimantés sinusoïdalement, de 5 mm de haut, avec un diamètre extérieur de 40mm et un diamètre intérieur de 36mm (sans culasse). Le rapport des composantes est Br/Bt=1.7 à 2 mm de distance de mesure. Grâce à l'aimantation sinusoïdale les composantes présentent des profils pleinement sinusoïdaux mais la différence d'amplitude entre les 2 composantes magnétiques impose l'utilisation d'un gain G de 0.53 qui permet de linéariser la variation de l'angle électrique selon le déplacement angulaire mécanique.

Sur la figure 9d, la courbe grise, en trait mixte interrompu, montre l'évolution de l'angle magnétique vu par le sonde magnétosensible (6) associée au rotor principal (5) et en trait noir interrompu l'erreur de position de +/-0.05% sur les 90° de course, soit +/- 0.05° résultant de l'utilisation d'une telle configuration d'aimant et d'aimantation. On illustre ainsi l'intérêt en termes de précision de l'emploi d'une aimantation sinusoïdale. Rappelons néanmoins que ce mode d'aimantation privilégié s'impose selon la configuration géométrique et le nombre de paires de pôles de l'aimant principal sur lequel on travaille et de la contrainte de précision que l'application impose.

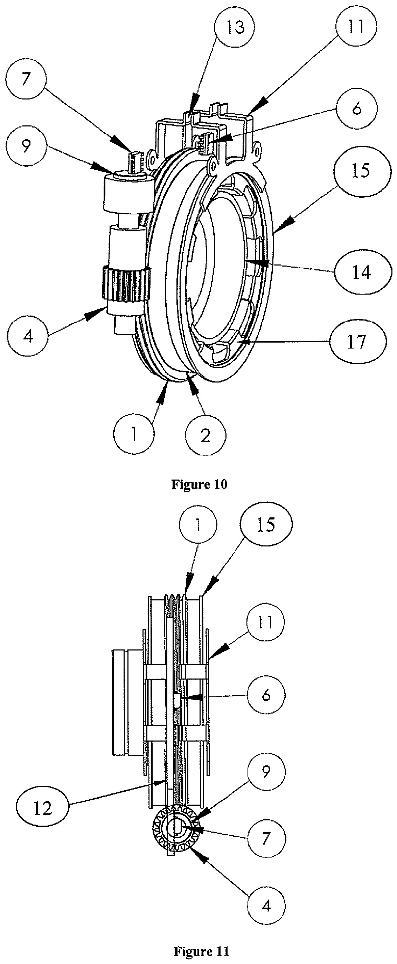

**La** figure 10 présente une première intégration possible d'un capteur magnétique de position multitour absolue et d'un capteur de rotation relative entre 2 arbres dit « capteur de couple » selon l'invention. Ce capteur de couple est formé d'une partie statorique (15) sous la forme de deux couronnes ferromagnétiques (17) prolongées par des dents qui s'épanouissent axialement, d'un aimant (14) multipolaire en regard de la partie statorique (15) et d'une partie collectrice (11) collectant le flux magnétique circulant dans la partie statorique (15) et d'une sonde (13) magnétosensible détectant l'intensité du champ magnétique ainsi collecté par la partie collectrice (11). Sur la partie extérieure de la partie statorique (15) est installé, de manière coaxiale et solidairement, l'aimant principal (2) du capteur de position multitour devant lequel est placé, fixe, la première sonde magnétosensible (6). Ainsi, lorsque l'ensemble statorique, solidaire d'un arbre d'entré, tourne autour de son axe de révolution, il entraine l'aimant principal (2) et l'organe menant (1) installé solidaire contre l'aimant principal (2). Le pignon-arbré (4) engraine sur l'organe menant (1) et entraine en rotation l'aimant secondaire (9) placé devant la seconde sonde magnétosensible (6). L'ensemble réalisé est ainsi très compact et permettant de réaliser un capteur « couple + position » dans une faible hauteur et permet l'installation sur le même circuit imprimé (12) (non visible sur cette figure 10), des trois sondes magnétosensibles (6, 7 et 13).

La figure 11 présente une deuxième intégration possible d'un capteur magnétique de position multitour absolue et d'un capteur de rotation relative entre 2 arbres dit « capteur de couple » selon l'invention. Dans cette configuration, l'aimant principal (2), non visible, est surmoulé à l'intérieur de l'organe menant (1), comme présenté sur la figure 5. Cet organe menant (1) est installé autour de la partie statorique (15). La première sonde (6) mesurant le champ magnétique de l'aimant principal (2), la seconde sonde (7) mesurant le champ magnétique de l'aimant secondaire (9) et la troisième sonde (13) du capteur de couple sont installés sur le même circuit imprimé (12). Cette réalisation permet une réalisation encore plus compacte que celle présentée en figure 10.

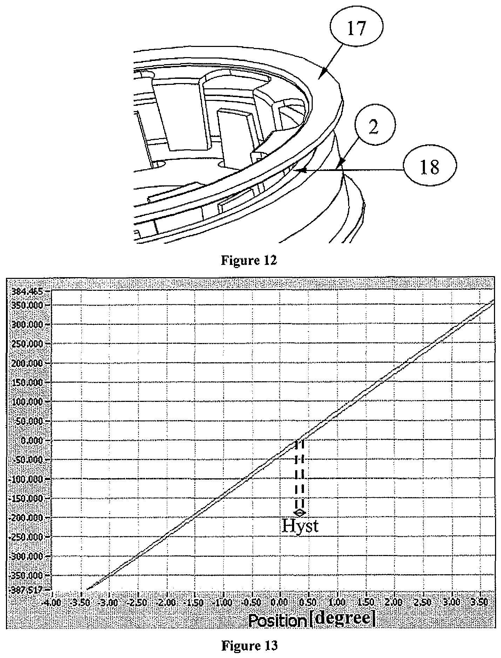

La figure 12 présente la partie ferromagnétique (17) de la partie statorique (15) du capteur de couple. Une bague ferromagnétique (18) est intercalée entre l'aimant principal (2) et la partie statorique (15) permettant un blindage magnétique empêchant le champ produit par l'aimant principal (2) de polluer le capteur de couple.

La figure 13 présente, sur une courbe de mesure et dans un principal général, l'évolution du signal capteur, retranscrit en Gauss, en fonction de la position, en degré, de l'arbre mesuré. L'hystérésis, noté Hyst, est la différence, en degré, entre les signaux obtenus dans un sens, puis l'autre, de rotation. Le dimensionnement de la période minimale du capteur de position multitour doit prendre en compte cet hystérésis quand il existe.

## Revendications

1.  Dispositif de détection magnétique de position absolue d'un arbre d'entrée en rotation constitué :

    • D'un rotor principal (5) comprenant un aimant principal (2) solidaire du dit arbre d'entrée effectuant une course de n fois 360°, n étant supérieur à 1, et d'un organe menant (1) d'une transformation de mouvement,
    • D'au moins une première sonde magnétosensible (6) délivrant, sur un angle magnétique de 360 degrés, un signal proportionnel à la direction du champ magnétique généré par l'aimant principal (2) dans le but de déduire une mesure de position absolue de l'arbre d'entrée,
    • D'un aimant secondaire (9) présentant 2 pôles magnétiques,
    • D'au moins une seconde sonde magnétosensible (7) délivrant, sur un angle magnétique de 360 degrés, un signal proportionnel à la direction du champ magnétique généré par l'aimant secondaire (9) et apte à en déduire une mesure de position absolue de l'aimant secondaire,

o la seconde sonde (7) et l'aimant secondaire (9) constituant un capteur de position de précision epsilon, exprimé en pourcent,
o l'aimant principal (2) étant multipolaire et présentant P paires de pôles, avec P supérieur à 1,

**caractérisé :**

• **en ce que** les première et deuxième sondes magnétosensibles (6, 7) sont agencées pour délivrer un signal sur un angle magnétique de 360 degrés
• **en ce que** l'aimant secondaire (9), lequel effectue une course voisine de 360 degrés sous l'effet de la rotation de l'arbre d'entrée effectuant une course de n fois 360° via la transformation de mouvement prenant place dans une tranche de l'espace comprise dans la tranche contenant l'aimant principal, est sensiblement positionné à l'intérieur de la hauteur H définie par les plans supérieur et inférieur du rotor principal (5),
• **en ce que** P est inférieur à la partie entière de 360 / T, avec

$$T > \frac{epsilon}{50}.360.n + Hyst$$

où Hyst est l'amplitude de l'hystérésis du dispositif de détection, exprimé en degré et ramené à l'arbre d'entrée,
• et **en ce que** l'aimant principal (2) étant inscrit dans le volume intérieur de l'organe menant (1).

**2.** Dispositif de détection magnétique de position absolue selon la revendication précédente **caractérisé en ce que** les P pôles sont à aimantation sinusoïdale.

**3.** Dispositif de détection magnétique de position absolue selon la revendication 1 **caractérisé en ce que** les P pôles sont à aimantation radiale.

**4.** Dispositif de détection magnétique de position absolue selon la revendication 1 **caractérisé en ce que** les P pôles sont à aimantation graduellement saturé.

**5.** Dispositif de détection magnétique de position absolue selon l'une des revendications précédentes **caractérisé en ce qu'**il est associé à une électronique qui, au moyen des signaux des 2 sondes magnétosensibles (6, 7), permet de déduire logiquement une position absolue de l'arbre d'entrée.

**6.** Dispositif de détection magnétique de position absolue selon l'une des revendications précédentes **caractérisé en ce que** l'aimant principal (2) est associé à au moins 2 sondes magnétosensibles.

**7.** Dispositif de détection magnétique de position absolue selon la revendication précédente **caractérisé en ce que** les deux sondes magnétosensibles sont décalées angulairement d'un angle égal à 360.i/P+90/P degrés avec i un entier naturel qui peut être nul.

**8.** Dispositif de détection magnétique de position absolue selon l'une des revendications précédentes **caractérisé en ce que** les première et seconde sondes magnétosensibles (6, 7) sont de type à effet Hall capable de lire, chacune, 2 signaux distincts B1 et B2 représentatifs de 2 des 3 composantes magnétiques générées par l'un ou l'autre des aimants principal (2) et secondaire (9).

**9.** Dispositif de détection magnétique de position absolue selon la revendication précédente **caractérisé en ce que** lesdites sondes (6, 7) sont aptes à calculer l'angle électrique β après multiplication d'un des 2 signaux B1 et B2 par un gain G tel que

$$\beta = Arctang(\frac{G.B1}{B2})$$

**10.** Dispositif de détection magnétique de position absolue selon l'une des revendications 1 à 7 **caractérisé en ce qu'**au moins une des sondes magnétosensibles (6, 7) est de type magnétorésistive.

**11.** Dispositif de détection magnétique de position absolue selon l'une des revendications précédentes **caractérisé en ce que** au moins une des sondes magnétosensibles est associée à un concentrateur de flux.

**12.** Dispositif de détection magnétique de position absolue selon l'une des revendications précédentes et notamment destiné à la détection de la torsion d'une colonne de direction, comprenant : au moins un dispositif de détection de la position angulaire relative d'un arbre d'entrée et de sortie coaxiaux reliés par une barre de torsion pour en déduire le couple de torsion exercé sur la barre, constitué d'une première structure magnétique rotorique comprenant une pluralité d'aimants (14), d'une seconde structure statorique (15) au voisinage de laquelle est placée au moins une sonde magnéto sensible (13), l'aimant principal (2) étant sensiblement concentrique à la structure statorique (15) **caractérisé en ce que** ladite sonde magnétosensible (13) du dispositif de détection de la position angulaire relative et les première et seconde sondes (6, 7) sont sensiblement positionnées à l'intérieur de la hauteur définie par les plans supérieur et inférieur du rotor principal (5).

**13.** Dispositif de détection magnétique de position absolue selon la revendication précédente **caractérisé en ce qu'**une bague ferromagnétique (18) est intercalée entre l'aimant principal (2) multipolaire du capteur de position et la seconde structure statorique (15) du dispositif de détection de la position angulaire relative.

**14.** Dispositif de détection magnétique de position absolue selon la revendication 12 ou 13 **caractérisé en ce que** la seconde structure statorique (15) du dispositif de détection de la position angulaire relative est constitué d'un support plastique (16) et d'une partie ferromagnétique (17), l'aimant principal (2) multipolaire et l'organe menant (1) de la transformation de mouvement étant intégrés au support plastique (16).

**15.** Dispositif de détection magnétique de position absolue selon la revendication 14 **caractérisé en ce que** l'organe menant (1) de la transformation de mouvement et le support plastique (16) sont une même pièce.

**16.** Dispositif de détection magnétique de position absolue selon la revendication 14 ou 15 **caractérisé en ce que** le support plastique (16) surmoule l'aimant principal (2) multipolaire.

**17.** Dispositif de détection magnétique de position absolue selon l'une des revendications 12 à 16 **caractérisé en ce que** le nombre P' de paires de pôles magnétique de la pluralité d'aimants (14) est égal à k fois le nombre P de paires de pôles magnétique de l'aimant principal (2), k étant entier.

**18.** Dispositif de détection magnétique de position absolue selon l'une des revendications 12 à 16 **caractérisé en ce que** le nombre P de paires de pôles magnétique de l'aimant principal (2) est égal à k fois le nombre P' de paires de pôles magnétique de la pluralité d'aimants (14), k étant entier.

**Patentansprüche**

**1.** Magnetischer Absolutpositionsdetektor einer sich drehenden Antriebswelle, bestehend aus:

   - einem Hauptrotor (5) mit einem Primärmagneten (2), der fest verbunden ist mit der Antriebswelle, die einen Weg von n mal 360° zurückgelegt, wobei n größer 1 ist, und mit einem Antriebsteil (1) für den Bewegungswandel,
   - mindestens einem ersten magnetempfindlichen Fühler (6), der in einem magnetischen Winkel von 360° ein Signal proportional zur Richtung des vom Primärmagneten (2) generierten Magnetfeldes liefert, um daraus eine Absolutpositionsmessung der Antriebswelle abzuleiten,
   - einem Sekundärmagneten (9) mit zwei Magnetpolen,
   - mindestens einem zweiten magnetempfindlichen Fühler (7), der in einem magnetischen Winkel von 360° ein Signal proportional zur Richtung des vom zweiten Magneten (9) generierten Magnetfelds liefert und in der Lage ist, daraus eine Absolutpositionsmessung für den Sekundärmagneten abzuleiten,
   - wobei der zweite Fühler (7) und der zweite Magnet (9) einen Positionssensor mit in Prozent ausgedrückter Epsilon-Präzision bilden,
   - wobei der Primärmagnet (2) mehrpolig ist und Polpaare P aufweist, wobei P größer 1 ist,

**dadurch gekennzeichnet:**

   - **dass** der erste und der zweite magnetempfindliche Fühler (6, 7) so angeordnet sind, dass sie über einen magnetischen Winkel von 360° ein Signal liefern,
   - **dass** der Sekundärmagnet (9), der einen Weg von ungefähr 360° unter Einwirkung der Drehung der Antriebswelle zurückgelegt, die über den Bewegungswandel, der in einem räumlichen Abschnitt stattfindet, der sich innerhalb des Abschnitts mit dem Primärmagneten befindet, einen Weg von n mal 360° zurückgelegt, im Wesentlichen innerhalb der Höhe H positioniert ist, die von der oberen und der unteren Ebene des Hauptmotors (5) abgegrenzt wird,
   - **dass** P kleiner als der ganzzahlige Teil von 360/T ist, wobei

$$T > \frac{epsilon}{50}\ 360.n + Hyst$$

ist, wobei Hyst die Amplitude der Hysterese der Detektionsvorrichtung ausgedrückt in Grad und bezogen auf die Antriebswelle ist,
   - und dadurch, dass der Primärmagnet (2) innerhalb des Innenvolumens des Antriebsteils (1) positioniert ist.

**2.** Magnetischer Absolutpositionsdetektor nach dem vorhergehenden Anspruch, **dadurch gekennzeichnet, dass** die Pole P sinusförmig magnetisiert sind.

**3.** Magnetischer Absolutpositionsdetektor nach Anspruch 1, **dadurch gekennzeichnet, dass** die Pole P radial magnetisiert sind.

**4.** Magnetischer Absolutpositionsdetektor nach Anspruch 1, **dadurch gekennzeichnet, dass** die Pole P in stufenweiser Sättigung magnetisiert sind.

5. Magnetischer Absolutpositionsdetektor nach einem der vorhergehenden Ansprüche, **dadurch gekennzeichnet, dass** er mit einer Elektronik verbunden ist, die mittels der Signale der beiden magnetempfindlichen Fühler (6, 7) die logische Ableitung einer Absolutposition der Antriebswelle ermöglicht.

6. Magnetischer Absolutpositionsdetektor nach einem der vorhergehenden Ansprüche, **dadurch gekennzeichnet, dass** der Primärmagnet (2) mit mindestens zwei magnetempfindlichen Fühlern verbunden ist.

7. Magnetischer Absolutpositionsdetektor nach dem vorhergehenden Anspruch, **dadurch gekennzeichnet, dass** die beiden magnetempfindlichen Fühler in einem Winkel gleich 360.i/P+90/P Grad winkelförmig versetzt sind, wobei i eine natürliches Zahl ist, die gleich Null sein kann.

8. Magnetischer Absolutpositionsdetektor nach einem der vorhergehenden Ansprüche, **dadurch gekennzeichnet, dass** der erste und der zweite magnetempfindliche Fühler (6, 7) Hall-Sensoren sind, die jeweils zwei unterschiedliche Signale B1 und B2, welche für zwei der drei durch den Primärmagneten (2) oder den Sekundärmagneten (9) generierte Magnetkomponenten stehen, lesen kann.

9. Magnetischer Absolutpositionsdetektor nach dem vorhergehenden Anspruch, **dadurch gekennzeichnet, dass** die Fühler (6, 7) in der Lage sind, den elektrischen Winkel β nach der Multiplikation eines der beiden Signale B1 und B2 mit einem Verstärkungsfaktor G zu berechnen, wie zum Beispiel

$$\beta = Arctang\left(\frac{G.B1}{B2}\right)$$

10. Magnetischer Absolutpositionsdetektor nach einem der Ansprüche 1 bis 7, **dadurch gekennzeichnet, dass** mindestens einer der magnetempfindlichen Fühler (6, 7) ein Magnetwiderstandsfühler ist.

11. Magnetischer Absolutpositionsdetektor nach einem der vorhergehenden Ansprüche, **dadurch gekennzeichnet, dass** mindestens einer der magnetempfindlichen Fühler mit einem Flussleitstück verbunden ist.

12. Magnetischer Absolutpositionsdetektor nach einem der vorhergehenden Ansprüche, der insbesondere zur Erkennung der Drehbewegung einer Lenksäule bestimmt ist, der folgendes umfasst: mindestens einer Vorrichtung zur Erkennung der relativen Winkelposition einer Antriebswelle und einer koaxialen Abtriebswelle, die über einen Torsionsstab miteinander verbunden sind, um daraus die auf die Stange ausgeübte Drehungszahl abzuleiten, bestehend aus einer ersten magnetischen Rotorstruktur mit einer Vielzahl von Magneten (14), einer zweiten Statorstruktur (15), in deren Nähe mindestens ein magnetempfindlicher Fühler (13) positioniert ist, wobei der Primärmagnet (2) im Wesentlichen konzentrisch zur Statorstruktur (15) ist, **dadurch gekennzeichnet, dass** der magnetempfindliche Fühler (13) der Vorrichtung zur Erkennung der relativen Absolutposition und der erste und der zweite Fühler (6, 7) im Wesentlichen innerhalb der von der oberen und unteren Ebene des Hauptrotors (5) abgegrenzten Höhe positioniert sind.

13. Magnetischer Absolutpositionsdetektor nach dem vorhergehenden Anspruch, **dadurch gekennzeichnet, dass** (18) zwischen dem multipolaren Primärmagneten (2) des Positionssensors und der zweiten Statorstruktur (15) der Vorrichtung zur Erkennung der relativen Winkelposition ein ferromagnetischer Ring eingesetzt ist.

14. Magnetischer Absolutpositionsdetektor nach Anspruch 12 oder 13, **dadurch gekennzeichnet, dass** die zweite Statorstruktur (15) der Vorrichtung zur Erkennung der relativen Winkelposition aus einem Kunststoffträger (16) und einem ferromagnetischen Teil (17) besteht, wobei der multipolare Primärmagnet (2) und das Antriebsteil (1) für den Bewegungswandel in den Kunststoffträger (16) integriert sind.

15. Magnetischer Absolutpositionsdetektor nach Anspruch 14, **dadurch gekennzeichnet, dass** das Antriebsteil (1) für den Bewegungswandel und der Kunststoffträger (16) ein einziges Stück sind.

16. Magnetischer Absolutpositionsdetektor nach Anspruch 14 oder 15, **dadurch gekennzeichnet, dass** der Kunststoffträger (16) auf den multipolaren Primärmagneten (2) aufgeformt ist.

17. Magnetischer Absolutpositionsdetektor nach einem der Ansprüche 12 bis 16, **dadurch gekennzeichnet, dass** die Anzahl der magnetischen Polpaare P' der Vielzahl von Magneten (14) gleich k Mal die Anzahl der magnetischen Polpaare P des Primärmagneten (2) ist, wobei k eine ganze Zahl ist.

18. Magnetischer Absolutpositionsdetektor nach einem der Ansprüche 12 bis 16, **dadurch gekennzeichnet, dass** die Anzahl der magnetischen Polpaare P des Primärmagneten (2) gleich k mal die Anzahl der magnetischen Polpaare P' der Vielzahl von Magneten (14) ist, wobei k eine ganze Zahl ist.

**Claims**

1. Magnetic detection device for detecting the absolute position of a rotating input shaft, comprising:

   * a main rotor (5) comprising a main magnet (2) integral with said input shaft travelling n times through 360°, wherein n is at 1 and a driving member (1) for motion transformation,
   * at least one first magnetic field-sensitive sensor (6) delivering, over a magnetic angle of 360 degrees, a signal proportional to the direction of the magnetic field generated by the main magnet (2) in order to deduce an absolute position measurement of the input shaft,
   * a secondary magnet (9) having 2 magnetic poles,
   * at least one second magnetic field-sensitive sensor (7) delivering, over a magnetic angle of 360 degrees, a signal proportional to the direction of the magnetic field generated by the secondary magnet (9) and capable of deducing therefrom an absolute position measurement of the secondary magnet,

      - wherein the second sensor (7) and the secondary magnet (9) form a position sensor of a precision epsilon, expressed in per cent,
      - wherein the main magnet (2) is multipolar and has P pairs of poles, with P being greater than 1,

   characterised:

   * in that the first and second magnetic field-sensitive sensors (6, 7) are arranged so as to deliver a signal over a magnetic angle of 360 degrees
   * in that the secondary magnet (9), which travels through nearly 360 degrees under the effect of the rotation of the input shaft travelling n times through 360° via the motion transformation taking place in a section of the space included in the section containing the main magnet, is substantially positioned within the height H defined by the upper and lower planes of the main rotor (5),
   * in that P is less than the integer part of 360 / T, with

   $$T > \frac{epsilon}{50} \, 360.n + Hyst$$

   where Hyst is the amplitude of the hysteresis of the detection device, expressed in degrees and with reference to the input shaft and in that the main magnet (2) is contained in the interior volume of the driving member (1).

2. Absolute position magnetic detection device according to the preceding claim, **characterised in that** the P poles are sinusoidally magnetised.

3. Absolute position magnetic detection device according to claim 1, **characterised in that** the P poles are radially magnetised.

4. Absolute position magnetic detection device according to claim 1, **characterised in that** the P poles have gradually saturated magnetisation.

5. Absolute position magnetic detection device according to any of the preceding claims, **characterised in that** it is combined with electronics which, by means of the signals of the 2 magnetic field-sensitive sensors (6, 7), make it possible to logically deduce an absolute position of the input shaft.

6. Absolute position magnetic detection device according to any of the preceding claims, **characterised in that** the main magnet (2) is combined with at least 2 magnetic field-sensitive sensors.

7. Absolute position magnetic detection device according to the preceding claim, **characterised in that** the two magnetic field-sensitive sensors are angularly offset by an angle equal to 360.i/P+90/P degrees with I being a natural integer that may be zero.

8. Absolute position magnetic detection device according to any of the preceding claims, **characterised in that** the first and second magnetic field-sensitive sensors (6, 7) are of the Hall-effect type, each capable of reading 2 separate signals B1 and B2 representative of 2 of the 3 magnetic components generated by either one of the main (2) and secondary (9) magnets.

9. Absolute position magnetic detection device according to the preceding claim, **characterised in that** said sensors (6, 7) are capable of calculating the electrical angle β following multiplication of one of the 2 signals 81 and 82 by a gain G such that

   $$\beta = Arctang\left(\frac{G.B1}{B2}\right)$$

10. Absolute position magnetic detection device according to any of claims 1 to 7, **characterised in that** at least one of the magnetic field-sensitive sensors (6, 7) is of the magnetoresistive type.

11. Absolute position magnetic detection device according to any of the preceding claims, **characterised in that** at least one of the magnetic field-sensitive sensors is combined with a flux concentrator.

**12.** Absolute position magnetic detection device according to any of the preceding claims and particularly intended for detecting torsion of a steering column, comprising: at least one device for detecting the relative angular position of a coaxial input and output shaft connected by a torsion bar to deduce the torsional torque exerted on the bar, consisting of a first rotoric magnetic structure including a plurality of magnets (14), of a second stator structure (15), near which at least one magnetic field-sensitive sensor (13) is placed, with the main magnet (2) being substantially concentric to the stator structure (15), **characterised in that** said magnetic field-sensitive sensor (13) of the device for detecting the relative angular position and the first and second sensors (6, 7) are substantially positioned within the height defined by the upper and lower planes of the main rotor (5).

**13.** Absolute position magnetic detection device according to the preceding claim, **characterised in that** a ferromagnetic ring (18) is interposed between the multipolar main magnet (2) of the position sensor and the second stator structure (15) of the relative angular position detection device.

**14.** Absolute position magnetic detection device according to claim 12 or 13, **characterised in that** the second stator structure (15) of the relative angular position detection device consists of a plastic support and a ferromagnetic portion (17), with the multipolar main magnet (2) and the driving member (1) for motion transformation being incorporated in the plastic support (16).

**15.** Absolute position magnetic detection device according to claim 14, **characterised in that** the driving member (1) for motion transfer and the plastic support (16) are the same component.

**16.** Absolute position magnetic detection device according to claim 14 or 15, **characterised in that** the plastic support (16) overmoulds the multipolar main magnet (2).

**17.** Absolute position magnetic detection device according to any of claims 12 to 16, **characterised in that** the number P' of pairs of magnetic poles of the plurality of magnets (14) is equal to k times the number P of pairs of magnetic poles of the main magnet (2), k being integer.

**18.** Absolute position magnetic detection device according to any of claims 12 to 16, **characterised in that** the number P of pairs of magnetic poles of the main magnet (2) is equal to k times the number P' of pairs of magnetic poles of the plurality of magnets (14), k being integer.

## Field rotation & Non-linearity

Figure 1

## Field rotation & Non-linearity

Figure 2

Figure 3

Figure 4a

Figure 4b

Figure 4c

Figure 5

Figure 6

## Typical electrical signals delivered by the sensor
### 8 pole pairs main magnet
### +/-3 turns

Figure 7

Figure 8

**Figure 9a**

**Figure 9b**

**Figure 9c**

**Figure 9d**

Figure 10

Figure 11

Figure 12

Figure 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009047401 A
- EP 1830155 A1
- EP 1830155 A
- WO 2005076860 A
- EP 1989505 A
- WO 2010046550 A1
- WO 2009101270 A
- EP 1269133 A
- EP 1774272 A